# EUROPÄISCHE PATENTANMELDUNG

(11) **EP 2 835 946 A1**
(43) Veröffentlichungstag der Anmeldung: **11.02.2015**
(21) Anmeldenummer: 13179894.4
(22) Anmeldetag: 09.08.2013
(51) Int. Cl.: H04L 29/06, H04W 12/06

(54) **Verfahren zur Personalisierung von Cloud basierenden Web RCS-Clients**

(71) Anmelder: Deutsche Telekom AG, 53113 Bonn (DE)
(72) Erfinder: Mildner, Frank, 64331 Weiterstadt (DE); Messmer, Martin, 13127 Berlin (DE); Friese, Ingo, 14195 Berlin (DE)
(74) Vertreter: Vossius & Partner

(57) **Zusammenfassung**

Die vorliegende Erfindung betrifft ein System sowie ein Verfahren zur sicheren Personalisierung von Cloud basierten Web RCS-Clients. Der Nutzer kann ein beliebiges Endgerät mit Webbrowser als Web RCS-Client verwenden. Mit diesem Web RCS-Client kann der Nutzer dann auf ein Serversystem das Cloud basierte Web RC-Dienste anbietet zugreifen. Vorzugsweise muss der Nutzer sich nicht selbst durch Eingabe von Nutzerdaten in den Web RCS-Client identifizieren.. Erfindungsgemäß überträgt der Web RCS Client seine Identifikations- und Authentisierungs- Informationen an den Nutzer. Diese Informationen kann der Nutzer dann mit Hilfe eines zusätzlichen Endgerätes mit geeigneter Software, beispielsweise ein Smartphone mit einer entsprechenden App, auswerten und für die Personalisierung an einen RCS Authentisierungsservice schicken. Erfindungsgemäß erhält der Web RCS-Client vom RCS Authentisierungsservice Informationen, mit denen sich der Web RCS-Client beim RCS Service Autorisiert, Personalisierungsinformationen erhält, sich registriert und ggf. bestehende RCS Session fortsetzt (RCS Session Handover).

## Beschreibung

Die Erfindung betrifft allgemein ein Verfahren sowie ein System zum Schutz der Privatsphäre bei der Anmeldung eines Nutzers an Web RCS-Diensten. Insbesondere betrifft die Erfindung allgemein die Identifizierung, Authentisierung und/oder Autorisierung von Nutzern gegenüber Cloud basierenden Web RCS-Diensten. So betrifft die Erfindung eine einfache und sichere Personalisierung von Cloud basierenden Web RCS-Clients und insbesondere eine Übergabe einer RCS-Session von einem Gerät auf ein anderes Gerät.

### Hintergrund der Erfindung

"Rich Communications Suite enhanced"(RCS-e) bzw. "Rich Communication Service" (RCS) ist ein technischer Standard für Kommunikationsdienste der Industrievereinigung der internationalen Mobilfunkanbieter. Der Standard ermöglicht unter anderem die Übertragung von Kurznachrichten, Dateien, Sprache und Videotelefonie.

RCS wird von einigen Endgeräteherstellern unterstützt, wobei bereits Geräte auszuliefert werden auf denen RCS-Clients, d.h. Software mit der auf RCS-Dienste zugegriffen werden kann, bereits vorinstalliert ist. Zudem können RCS-Clients als Software auf Smartphones implementiert werden, beispielsweise in Form von "Apps", beispielsweise für Android oder iOS.

RCS greift auf bestehende Standards der 3GPP und Open Mobile Alliance (OMA) zurück. RCS soll die Stärke des GSM-Standards, die einfache und intuitive Handhabung, nutzen und um Zusatzfunktionen erweitern. Eine zentrale Neuerung ist beispielsweise ein verbessertes Telefonbuch, in dem mehrere Funktionen zusammenlaufen. So kann das neue Telefonbuch beispielsweise anzeigen, welche Art der Kontaktaufnahme möglich ist. Hat beispielsweise der zu Kontaktierende eine schlechte Internetverbindung, soll ein Videotelefonat gar nicht erst angeboten werden. Auf Netzwerkebene setzt RCS auf folgenden Protokollen auf: SIP(S); (S)RTP; MSRP(S) und HTTP(S).

Neben einer Implementierung als Software App gibt es zudem RCS-Clients die in einem Webbrowser laufen (Web RCS-Clients). Dies hat beispielsweise den Vorteil, dass ein Nutzer/User auf gewünschte RCS-Dienste nicht nur von seinem Smartphone zugreifen kann, sondern von jedem Gerät, das eine Internetverbindung und einen Webbrowser hat. Die nutzerspezifischen Daten können zudem vorzugsweise zentral in einer "Datenbank" (beispielsweise Cloud) gespeichert werden, auf die von dem Webbrowser zugegriffen werden kann. Dies kann beispielsweise als Cloud basierter Web RCS-Dienst erfolgen.

Ein personalisierter "Web RCS-Dienst in der Cloud" ist im Sinne dieser Patentanmeldung ein auf einen Nutzer/Person zugeschnittener persönlicher RCS-Dienst, der dem RCS-Nutzer an jedem beliebigen Endgerät mit Webbrowser mittels eines Cloud basierenden Web RCS-Clients die gleiche Usability (Bedienbarkeit) und RCS-Service Features, z.B. Adressbuch, zur Verfügung stellt wie bekannte lokal implementierte und personalisierte RCS-Clients des RCS-Nutzers im Smartphone.

Cloud basierende Web RCS-Clients können im Gegensatz zu im Smartphone implementierten RCS-Clients von jedem beliebigen Endgerät (PC, IPTV, ...), vorzugsweise mittels eines WebRTC (Web Real-Time Communication, deutsch "Web-Echtzeitkommunikation") fähigen Webbrowser ohne Implementierung eines speziellen RCS-Clients auf diesem Gerät genutzt werden. Das Grundprinzip von Cloud basierenden Web RCS-Diensten beruht vorzugsweise auf Cloud basierenden offenen Web RCS-Clients im Proxy Modus. Mit anderen Worten, ein Cloud Service mit einem Web Server stellt Web RCS-Clients bereit, die dann mit dem eigentlichen RCS-Service Application Server kommuniziert, d.h., der Cloud Service kann als "Proxy" angesehen werden.

Zur Nutzung von Cloud basierenden Web RCS-Diensten über ein beliebiges Endgerät, vorzugsweise mit WebRTC fähigem Browser müssen diese Cloud basierenden offenen Web RCS-Clients für die Registrierung am RCS-Service personalisiert werden. Voraussetzungen für die Personalisierung eines Cloud basierenden offenen Web RCS-Clients ist *Identifizierung, Authentisierung* des RCS-Nutzers und *Autorisierung* des Web RCS-Clients zur Registrierung am RCS-Account und zum Übernehmen des RCS-Nutzers (user) Profiles, Adressbuch, usw. und autorisieren der Browser Session mit dem Web RCS-Client. Mit anderen Worten, dadurch dass der Nutzer nicht direkt auf einen RCS-Service zugreift, sondern über eine Zwischenstation (Proxy), nämlich dem Cloud Service, erfolgen mehrere aufeinanderfolgende Schritte für Identifizierung (*Wer will Dienste nutzen*), Authentisierung (*Nutzer ist tatsächlich der für den er sich ausgibt*) und Autorisierung (*Nutzer darf bestimmte Dinge tun*). Zudem kann es erwünscht sein, dass eine RCS-Session auf einem Smartphone gestartet wird und diese RCS-Session an ein anderes beliebiges Endgerät, vorzugsweise mit einem WebRTC fähigem Browser, übergegen werden soll (sogenanntes Session handover).

Eine Herausforderung liegt darin, eine bedienfreundliche und dennoch sichere und "Privacy protected" (Schutz der Privatsphäre) Identifizierung, Authentisierung des RCS-Nutzers sowie Autorisierung der Session am fremden PC/TV und vorzugsweise Autorisierung des Web RCS-Clients bereitzustellen.

Es ist eine Aufgabe der vorliegenden Erfindung einem RCS-Nutzer an beliebigen Endgeräten die gleiche Usability (Bedienbarkeit), Sicherheit und Privacy (Privatsphäre) wie an einem mobilen RCS-Client (RCS App) seines Smartphones zur Verfügung zu stellen. Vorzugsweise soll es erfindungsgemäß keinen Medienbruch geben. Erfindungsgemäß kann beispielsweise die Nutzung von RCS auf beliebige Geräte, z.b. PC, Laptop, Tablett sowie TV Geräte, ausgeweitet werden. Zudem ist es erfindungsgemäß bevorzugt, dass eine RCS-Sitzung (RCS-Session) von einem Endgerät zu einem anderen Endgerät einfach übergeben werden kann (ein Session Handover), beispielsweise von einen Smartphone zu einem anderen beliebigen Gerät.

Heutige Identifizierungs- bzw. Authentisierungs-Verfahren zur Nutzung personalisierter Cloud basierenden Web RCS-Diensten basieren alle darauf, dass der Nutzer zur Initiierung des personalisierten Web RCS-Dienstes seine Nutzerdaten, beispielsweise erst seine Identität/Kennung/Login ID und dann sein Passwort bzw. PIN an einem möglicherweise fremden Endgerät eingeben muss. D.h., der Nutzer identifiziert sich gegenüber dem RCS-Dienst. Zudem sind diese bekannten Identifizierungs- bzw. Authentisierungs-Verfahren für eine Session Handover nur sehr umständlich oder kaum realisierbar. Auch besteht bei diesen Verfahren immer noch die Gefahr, dass das Passwort am fremden Endgerät abgegriffen wird.

Mittels dieser Nutzerdaten versucht der Cloud basierende Web RCS-Client eine Registrierung am RCS-Server zu erlangen. Bekannte Verfahren haben alle das folgende Grundprinzip: Der Nutzer muss sich gegenüber dem Cloud basierenden Web RCS-Client am fremden Endgerät Identifizieren und Authentisieren, wodurch Privacy, Security und Usability Probleme entstehen können. Insbesondere erhält ein bekannter Cloud basierender Web RCS-Client Kennung und Passwort, wodurch ein Security (Sicherheits) Problem entstehen kann. Manche Verfahren versenden zur Erhöhung der Sicherheit One-Time Passwörter (OTP), beispielsweise per SMS an den Nutzer, die er dann am fremden Gerät eingeben muss. Möglich sind auch Kryptokarten, die jedoch umständlich zu bedienen sind.

Diese Voraussetzungen schränken die Nutzung und auch Akzeptanz ein. Heutige Verfahren sind somit gekennzeichnet von einer schlechten Handhabbarkeit (Usability), eingeschränkten Datenschutz (Schutz seiner persönlichen Daten; Privatsphäre, Privacy), Eingabefehlern und eingeschränkter Sicherheit. Heutige Verfahren lassen die Personalisierung und damit die Nutzung personalisierter Cloud basierender Web RCS-Dienste insbesondere für auf Privacy sensibilisierte Nutzer und für technisch nicht versierte Nutzer als nicht akzeptabel erscheinen.

Die Nachteile der Verfahren aus dem Stand der Technik lassen sich stichpunktartig nochmals wie folgt zusammenfassen:
- Schlechte **Usability**; Umständliche Eingabe von username und password durch den Nutzer am fremden Endgerät. Insbesondere mangelnde Eingabemöglichkeiten über z.B. TV Fernbedienung, hier ist i.d.R. nur ein beschränkter Zeichensatz verfügbar.
- Verletzung der **Privacy** (Privatsphäre) des Nutzers, insbesondere durch direkte oder indirekte Weitergabe der Nutzerkennung an fremde Endgeräte.
- Mangelnde **Security**; Möglichkeit der Phishings, user kann auf "falsche" RCS Seite gelockt werden, wo dann username und password abgegriffen werden. Speicherung des username in (fremden) Endgerät (key logs), Missbrauch der Nutzerkennung durch Dritte. Verwendung von unbequemen One-Time Passwörter (OTP) über SMS.
- Unzureichende Unterstützung eines Session Handovers, beispielsweise eines RCS-Session handover zwischen Smartphone und Webclient bzw. smartphone und PC, TV.

Es besteht somit der Bedarf für ein Verfahren bzw. System das den gestiegenen Privacy und Security Anforderungen von Nutzern und Diensten genügt und eine bequeme, fehlerfreie Nutzung bei gleichzeitiger hoher Sicherheit gewährleistet.

Erfindungsgemäß wird ein System und ein Verfahren bereitgestellt, zur Personalisierung von Cloud basierenden Web RCS-Clients und Autorisierung einer Browser Session, das mindestens einen der folgenden Vorteile bietet:
- Einfache Bedienbarkeit (Usability), vorzugsweise keine Eingaben von Nutzererkennung durch den Nutzer wie beispielsweise username und password;
- Schutz der Privatsphäre (Privacy) des Nutzers, vorzugsweise indem eine Eingabe / Speichermöglichkeit von Nutzerkennung an fremden Endgeräten ausgeschlossen wird;
- Schutz der Privatsphäre (Privacy) des Nutzers, vorzugsweise indem eine Speichermöglichkeit von Nutzerkennung an Cloud Services ausgeschlossen wird;
- Hohe Sicherheit durch Authentisierung des Nutzers am eigenen RCS-Account mittels extra Anwendung, vorzugsweise auf einem zusätzlichen Gerät, beispielsweise auf einem Smartphone;
- Eine starke Authentisierung des Nutzers, beispielsweise durch zwei Faktoren, z.B. Besitz eines zusätzlichen Gerät, beispielsweise eines Smartphones und Kenntnis der PIN des Smartphones;
- Hohe Sicherheit durch sichere Autorisierung des Cloud basierenden offenen Web RCS-Clients zur Registrierung am RCS-Account des Nutzers;
- Unterbindung, dass sich unberechtigte Cloud Services am RCS user account registrieren;
- Ausschluss von Bedienfehlern, vorzugsweise braucht ein Nutzer keine Eingaben am fremden Endgerät, z.B., PC oder TV, zu tätigen;
- Erkennung von Eingabefehlern, beispielsweise Erkennung am AuthN Client eines Smartphones;
- Erkennung von falschen Cloud Services;
- Kein zusätzlicher Aufwand an bestehenden Endgeräten notwendig;
- Kein zusätzlicher Aufwand an bestehenden RCS-Services notwendig; und
- Übergreifendes betreiben durch RCS-Provider.
- Unterstützung von RCS-Session Handover.

Mit dem erfindungsgemäßen Verfahren bzw. Telekommunikationssystem kann die Nutzung von Cloud basierenden Web RCS-Services, insbesondere für Privacy sensible und nicht Experten erleichtert bzw. erschlossen werden und auf andere Geräte ausgedehnt werden. Zudem kann die Privatsphäre und Sicherheit der Nutzer gegenüber dem Stand der Technik besser geschützt werden.

### ZUSAMMENFASSUNG DER ERFINDUNG

Die Aufgaben der Erfindung werden durch die Merkmalskombination der unabhängigen Ansprüche sowie der unten diskutierten Aspekte gelöst. Weitere bevorzugte Ausführungsformen der vorliegenden Erfindung werden in den abhängigen Ansprüchen definiert bzw. in den unten dargestellten Ausführungsformen diskutiert.

Eine grundlegende Idee der vorliegenden Erfindung besteht darin, dass ein RCS-Nutzer an einem beliebigen Endgerät mit Webbrowser, beispielsweise einem PC, Laptop oder TV mit Internet Zugang (IPTV) sein personalisiertes RCS-Produkt nutzen kann, vorzugsweise bequem und sicher nutzen kann. Mit dem erfindungsgemäßen System kann ein Nutzer beispielsweise eine RCS-Session an einem IPTV starten oder eine bestehende Session von einem Smartphone zum anderen Endgerät (z.B. IPTV) übergeben. Der Nutzer benötigt dazu nur ein zusätzliches Endgerät mit einer RCS Authentication Applikation (im Folgenden auch als RCS AuthN App bezeichnet), beispielsweise ein Smartphone mit einer entsprechenden RCS Authentication "App", wobei der IPTV vorzugsweise einen WebRTC fähigen Browser haben sollte.

Zudem soll erfindungsgemäße auch ein Verfahren bereitgestellt werden, mit dem ein RCS Nutzer einen auf einem Endgerät angefangenen Dienst (eine RCS-Session) einfach und sicher auf ein anderes Endgerät übergegen kann (Handover). So ist es im Sinne der Erfindung beispielsweise besonders bevorzugt, dass eine RCS-Sessions von einem Smartphone zu einem anderen Endgerät z.B. PC oder TV übergegen werden kann.

Die vorliegende Erfindung betrifft ein System sowie ein Verfahren zur sicheren Personalisierung von Cloud basierten Web RCS-Clients. Der Nutzer kann ein beliebiges Endgerät mit Webbrowser als Web RCS-Client verwenden. Mit diesem Web RCS-Client kann der Nutzer dann auf ein Serversystem das Cloud basierte Web RC-Dienste anbietet zugreifen. Vorzugsweise muss der Nutzer sich nicht selbst durch Eingabe von Nutzerdaten in den Web RCS-Client identifizieren.. Erfindungsgemäß überträgt der Web RCS Client seine Identifikations- und Authentisierungs- Informationen an den Nutzer. Diese Informationen kann der Nutzer dann mit Hilfe eines zusätzlichen Endgerätes mit geeigneter Software, beispielsweise ein Smartphone mit einer entsprechenden App, auswerten und für die Personalisierung an einen RCS Authentisierungsservice schicken. Erfindungsgemäß erhält der Web RCS-Client vom RCS Authentisierungsservice Informationen, mit denen sich der Web RCS-Client beim RCS Service Autorisiert, Personalisierungsinformationen erhält, sich registriert und ggf. bestehende RCS Session fortsetzt (RCS Session Handover).

### KURZE BESCHREIBUNG DER ZEICHNUNGEN

Im Folgenden werden bevorzugte Ausführungsformen der vorliegenden Erfindung unter Bezugnahme auf die Figuren ausführlicher beschrieben. Es zeigen:
- Fig. 1: den prinzipiellen Aufbau eines Telekommunikationssystems, in welchem die Erfindung verwirklicht werden kann;
- Fig. 2: das erfindungsgemäße sehr vereinfachte Grundprinzip aus der Sicht eines Nutzers um ein RCS-Produkt mittels IPTV und Smartphone sehr einfach zu verwenden;
- Fig. 3: beispielhafte Schritte einer Ausführungsform eines ersten erfindungsgemäßen Verfahrens anhand eines Flussdiagramms;
- Fig. 4: beispielhafte Schritte einer Ausführungsform eines ersten erfindungsgemäßen Verfahrens anhand eines Flussdiagramms; und
- Fig. 5: Komponenten des erfindungsgemäßen Systems mit entsprechenden Schnittstellen zur Durchführung des erfindungsgemäßen Verfahrens.

### DETAILLIERTE BESCHREIBUNG BEVORZUGTER AUSFÜHRUNGSFORMEN

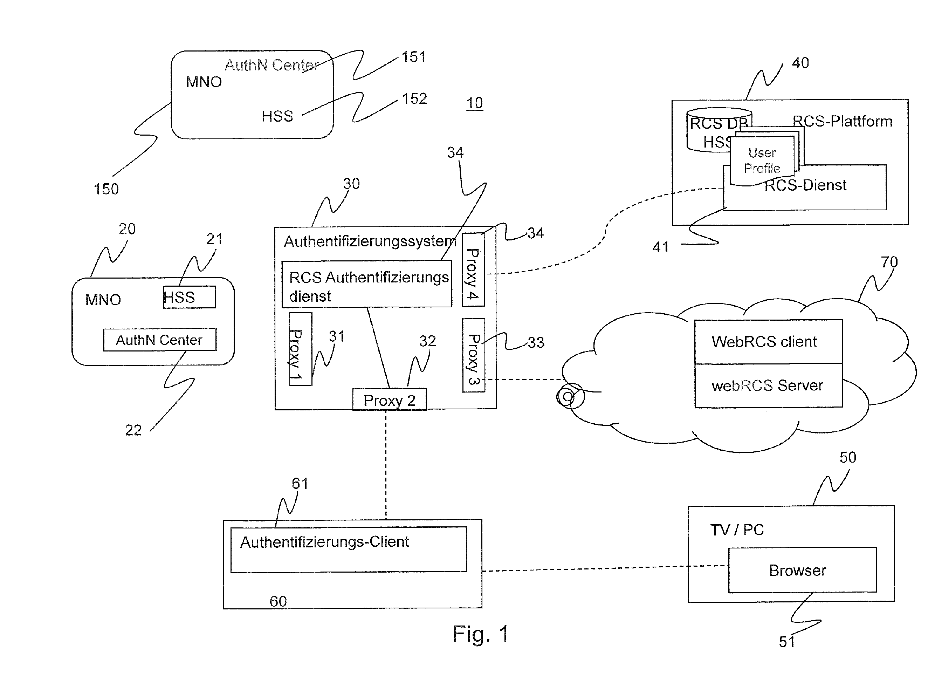

Figur 1 zeigt ein beispielhaftes Telekommunikationssystem 10, in welchem die Erfindung verwirklicht ist. Hierbei sollte beachtet werden, dass in Fig. 1 gestrichelt nur die Kommunikation zur Authetifizierung des Nutzers dargestellt ist.

Das Telekommunikationssystem 10 umfasst beispielsweise als zentrale Einheit ein Authentifizierungssystem 30 mit einem RCS Authentifizierungsdienst 34. Der RCS Authentifizierungsdienst 34 ist dazu ausgebildet, eine RCS Authentifizierungsfunktion auszuführen, um einem Nutzer einen Schutz der Privatsphäre bei der Anmeldung an einem RCS-Dienst zu ermöglichen. Das Authentifizierungssystem 30 weist dazu mehrere Kommunikationsschnittstellen, auch Proxy genannt, auf.

Beispielsweise möchte ein Nutzer von einem beliebigen Endgerät 50 (z.B. IPTV) auf den RCS-Dienst 41 der RCS-Plattform 40 zugreifen. Zur einfachen und sicheren Authentifizierung, insbesondere unter Schutz der Privatsphäre, greift der Nutzer unter Verwendung eines Cloud Service 70 und unter Verwendung eines Smartphones 60 auf den RCS-Dienst 41 zu, wobei die Authentifizierung über das zentrale Authentifizierungssystem 30 erfolgt.

Auf der RCS-Plattform 40 ist ein RCS-Dienst 41 vorgesehen. Zudem weist das Authentifizierungssystems 30 weitere Kommunikationsschnittstellen 31, 32 und 33 auf. Beispielsweise können diese Schnittstellen als http- oder https-Schnittstelle ausgebildet sein.

Das Telekommunikationssystem 10 enthält ferner wenigstens ein Mobilfunkgerät 60 bzw. Smartphone 60, welches vorzugsweise dem Nutzer des TV/PC 50 gehört. Das Smartphone 60, welches ein Mobilfunktelefon sein kann, weist in an sich bekannter Weise eine SIM-Karte auf, welcher eine eindeutige Identifikation beispielsweise in Form einer IMSI-Nummer oder einer MSISDN-Nummer zugeordnet ist. In dem Smartphone 60 ist weiterhin ein Authentifizierungs Client 61, auch Authentifizierungs-Applikation bzw. RCS AuthN App, installiert. Für die vorliegende Erfindung ist es unerheblich, ob die RCS AuthN App 61 im Smartphone 60 oder in der SIM-Karte installiert ist. Weiterhin enthält das Smartphone 60 vorzugsweise einen Barcode-Leser und/oder eine Kamera. Das Authentifizierungssytem 30 verfügt über eine Kommunikationsschnittstelle 32, über die der Authentifizierungsdienst 34 mit der RCS AuthN App 61 des Smartphones 60 kommunizieren kann. Wie nachfolgend noch näher erläutert wird, kann die RCS AuthN App 61 Push-Anforderungsmeldungen erzeugen, mit denen der Authentifizierungsdienst 34 aufgefordert werden kann, einen Authentifizierungsprozess zu starten.

Die Kommunikation zwischen dem Authentifizierungsdienst 34 und der RCS AuthN App 61 des Smartphones 60 erfolgt vorzugsweise über ein Mobilfunknetz an welchem der Nutzer über das Smartphone 60 angemeldet ist. Angenommen sei, dass der Nutzer beim Mobilfünknetzbetreiber 20 angemeldet ist. Um eine Authentifizierung durchführen zu können, kann das Authentifizierungssystem 30 eine weitere Kommunikationsschnittstelle 31 aufweisen, über die der Authentifizierungsdienst 34 mit einer Authentifizierungseinrichtung 21 des Mobilfunknetzbetreibers 20 kommunizieren kann.

Das Telekommunikationssystem 10 kann weitere Mobilfunknetze anderer Mobilfunkbetreiber umfassen. Der einfachen Darstellung wegen ist lediglich ein weiterer Mobilfunknetzbetreiber 150 dargestellt. Die Mobilfunkbetreiber 20 und 150 betreiben in an sich bekannter Weise ein Heimat-Teilnehmersystem 22 bzw. 152, auch Home-Subscriber-System (HSS) genannt. Jedes Home-Subscriber-System verwaltet in an sich bekannter Weise alle Daten der jeweiligen angemeldeten Mobilfunkgeräte. Das Home-Subscriber-System 22 verwaltet unter anderem die Daten des Nutzers des Smartphones 60.

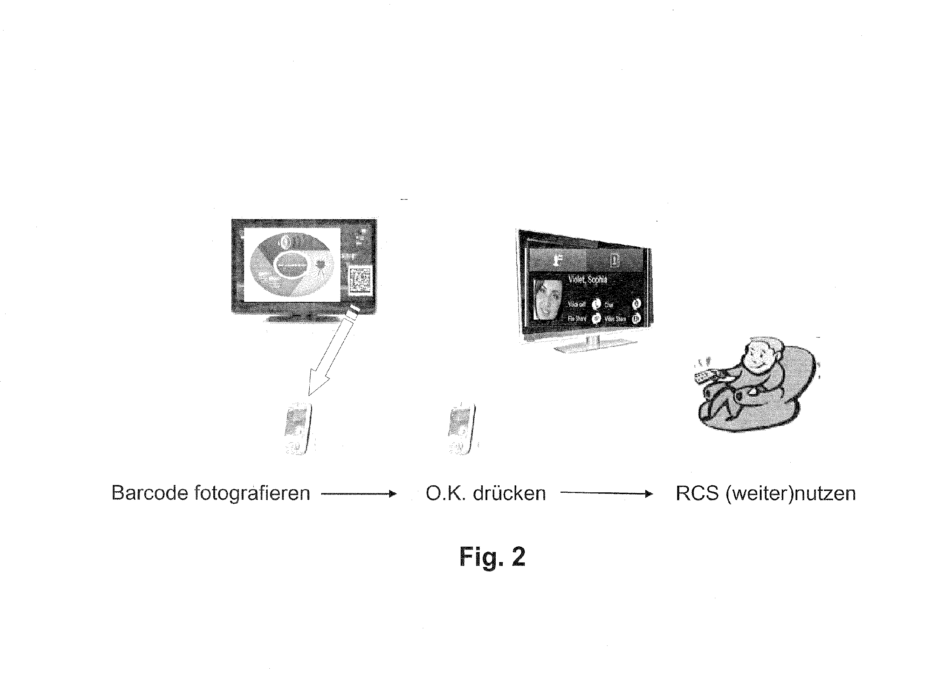

Figur 2 illustriert die einfache Handhabbarkeit der vorliegenden Erfindung. Ein Nutzer eines RCS-Produkts/RCS-Dienstes wird durch die Erfindung in die Lage versetzt an jeden beliebigen Endgerät, hier als TV dargestellt, sein personalisiertes RCS-Produkt (beispielsweise "My RCS") zu nutzen oder RCS Sessions fortzusetzen. Im Wesentlichen sind hierzu nur zwei Schritte notwendig:
1) Übertragung von Informationen, mit denen sich der Web RCS-Client beim Nutzer identifiziert und/oder authentisiert an ein zusätzliches Endgerät, hier ein Smartphone. Beispielsweise kann eine einfache Datenübertagung mittels Aufnahme eines 2D Barcodes von einem PC/TV Browser mit dem Smartphone erfolgen. Auf dem Smartphone ist zudem eine RCS Authentication App installiert. Anstelle einer Datenübertragung mittels 2D Barcode sind auch andere Übertragungsverfahren möglich ohne auf ein Verfahren beschränkt zu sein, beispielsweise NFC (Near Field Communication; "Nahfeldkommunikation"), oder Bluetooth, usw.
2) Anschließend bestätigt der Nutzer am Smartphone in der RCS Authentication App die Richtigkeit (ok). Gegebenenfalls kann zur Erhöhung der Sicherheit noch eine Eingabe einer PIN bzw. einer PIN des Mobile Phone Nutzung von My RCS abgefragt werden. Nun kann der Nutzer bequem und sicher "My RCS" nutzen.

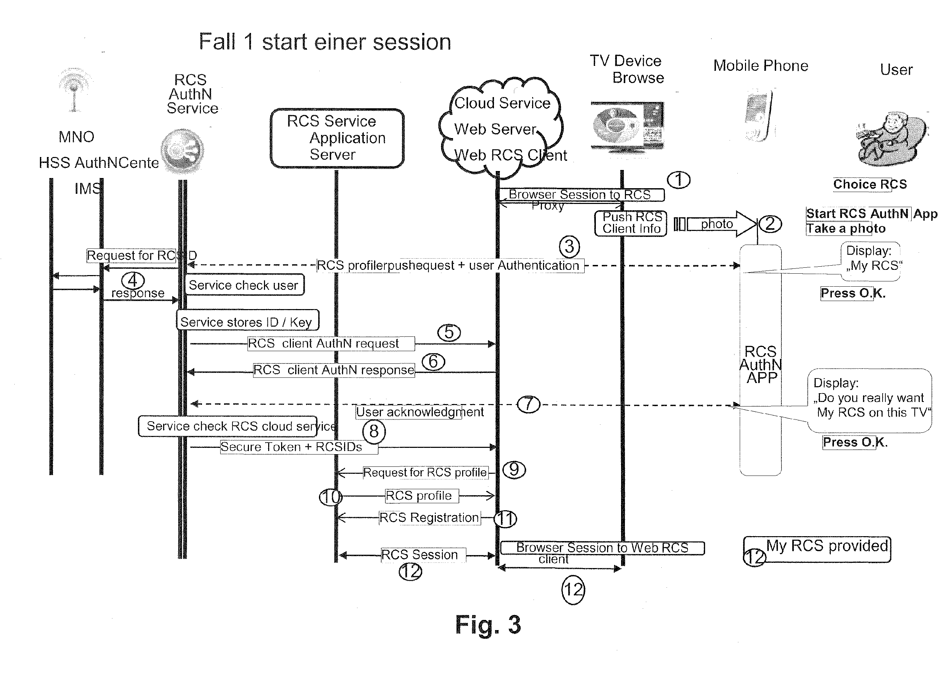

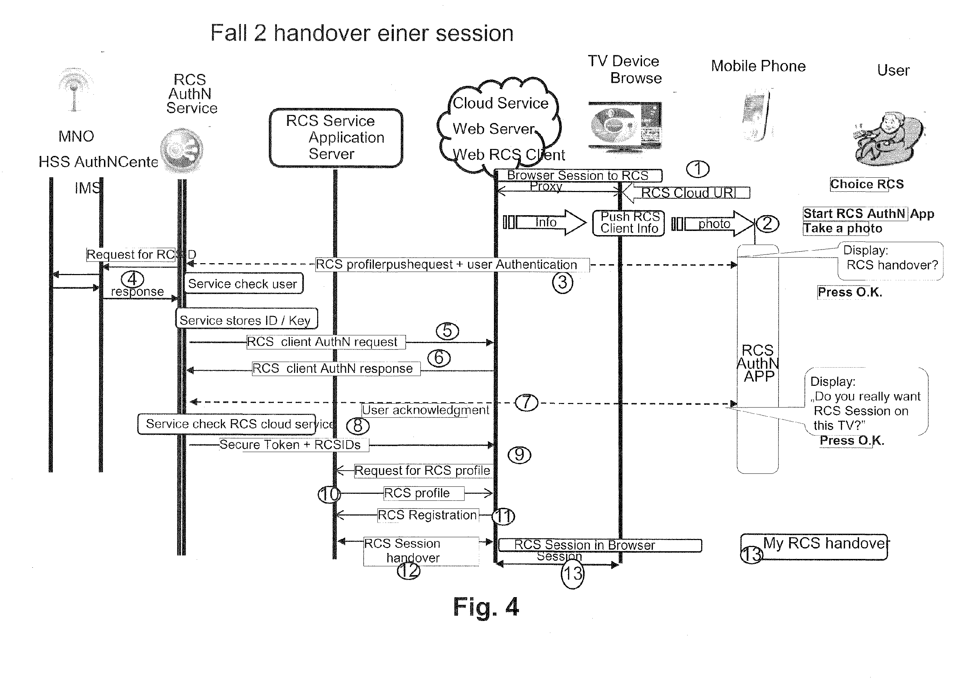

Im Gegensatz zu Verfahren aus dem Stand der Technik identifiziert und authentisiert sich erfindungsgemäß der Web RCS-Client gegenüber dem Nutzer und einem "RCS AuthN Service" (siehe Fig. 3 und 4 unten). Dies wird realisiert durch die Rolle des Mobilfunkbetreibers als "Validierer" Identity Provider (IdP) für die Authentisierung des Nutzers und als Attribute Provider zur Lieferung der Identitätsdaten des Nutzers an den RCS AuthN Service. Erfindungsgemäß kann dies durch Anwendung eines neuen Protokollelements "RCS clientAuthNrequest", einer RCS Authentication App im zusätzlichen Endgerät (Smartphone) und/oder einem RCS Authentication Service realisiert oder fortgesetzt werden. Dies führt zu einem neuen mobilen, sicheren und Privacy protected Authentisierungs- und Autorisierungs-Verfahren von Cloud basierenden Web RCS-Clients über beliebige PC/TV Endgeräte. Zudem ermöglicht das erfindungsgemäße Verfahren auch ein neues mobiles, sicheres und Privacy protected Handover von RCS-Sessions zwischen Smartphone und beliebigen PC/TV Endgeräten mittels Cloud basierenden Web RCS-Clients.

Einzelne Verfahrensschritte eines ersten erfindungsgemäßen Verfahrens werden beispielhaft anhand des Flussdiagramms der Fig. 3 diskutiert. Es wird jedoch ausdrücklich hervorgehoben, dass nicht alle Schritte zwingend notwendig sind und nur exemplarisch dargestellt werden. Die folgende Nummerierung entspricht den Nummern in Fig. 3 wobei Begriffe aus der Fig. 3 nachfolgend zusätzlich in Klammern aufgeführt werden.
1. Ein RCS-Nutzer (User) möchte an einem beliebigen Endgerät (TV Device) das einen Webbrowser (Browser) hat, hier beispielhaft als PC/IPTV Vorrichtung dargestellt, seinen personalisierten RCS-Dienst "My RCS" sicher bequem und gegebenenfalls anonym gegenüber dem Endgerät nutzen (Choice RCS). Beispielsweise möchte der RCS-Nutzer eine Kurznachricht oder ein Bild an Freunde von seinem TV verschicken. Über den Webbrowser des TV wählt der Nutzer einen RCS Cloud Service, d.h. er ruft eine Webseite durch Eingabe einer Webadresse auf bzw. durch Auswahl eines gespeicherten "Bookmarks" (Browser Session to RCS Proxy). Diese Web RCS-Seite bietet die Option "automatische RCS Registration" ("My RCS") an.

Die Web RCS-Seite überträgt an den Webbrowser beispielweise mindestens eine der folgenden RCS-Client Information (Push RCS Client Info):
- den Link zum Web RCS Client cloud Service (URI),
- die Session ID des Cloud basierenden Web Clients mit dem Browser, und
- einen Schlüssel/key der z.B. die IP (IP Adresse) des IPTV Geräts und ggf. eine Zeitmarke (timestamp) einhält.

Insbesondere wird der Web RCS-Client von einem WebServer eines Cloud Service bereitgestellt, der als "Proxy" angesehen werden kann (Cloud Service, Web Server, Web RCS Client).

Mittels der oben aufgezählten RCS-Client Information identifiziert sich der Cloud basierende Web RCS-Client gegenüber dem Nutzer und vorzugsweise auch gegenüber einem RCS Authentication Service (RCS AuthN Service). Mit anderen Worten, im Gegensatz zu Verfahren aus dem Stand der Technik identifiziert und authentisiert sich erfindungsgemäß der Web RCS-Client gegenüber dem Nutzer.
2. Der Nutzer (User) übernimmt diese RCS-Client Information in eine geeignete RCS Authentication Anwendung (RCSAuthN APP), die vorzugsweise auf einem zusätzlichen Endgerät (Mobile Phone) läuft (Start RCSAuthN App). Beispielsweise kann die RCSAuthN APP auf dem Smartphone des Nutzers installiert sein. Die RCS-Client Information können vom IPTV mit allen denkbaren Übermittlungsverfahren übertragen werden. Beispielhaft zeigt der Webbrowser in der Fig. 2 eine 2D-Barcode an der mit der Kamera eines Smartphones gescannt werden kann (Take a photo), um die entsprechenden Informationen daraus zu extrahieren. Als weitere Verfahren zur Datenübermittlung wird hier rein beispielhafte auf Barcodeleser, Kamera, NFC, bluetooth, dect, sound oder abtippen eines "session code" verwiesen.
3. Die RCS Authentisierungs Anwendung (RCSAuthN APP) im Smartphone oder auf der SIM-Karte wertet diese Informationen aus und bildet aus diesen Informationen nach Nutzerzustimmung (Press O.K.) eine Web RCS-Client Personalisierungsanfrage (RCS profilerpushrequest + user Authentication) die an den RCS Authentisierungsservice (RCSAuthN) gesendet wird. Dies erfolgt vorzugsweise über das Mobilfunknetz des Smartphones.

Hierbei wird beispielsweise eine Web RCS Cloud Service Adresse (URI), eine Session ID des Cloud basierenden Web RCS-Clients, die IP dieses Web RCS-Clients und ggf. der timestamp der Session und ggf. eine RCS ID des Nutzers (SIP URI) übertragen.
4. Der RCS Authentisierungsservice (RCSAuthN) initiiert als erstes eine Identifizierung des RCS-Nutzers gegenüber dem Netzerk, IMS oder HSS basierend auf der IP Adresse des Smartphones (network authentication GIBA), oder basierend auf MSISDN (Mobile Subscriber Integrated Services Digital Network Number oder auch Mobile Station Integrated Services Digital Network Number; die weltweit eindeutige Rufnummer) oder basierend auf der RCS SIP (Session Initiation Protocol) URI. Dazu werden beispielsweise aus dem Network, IMS oder HSS die RCS Nutzer IDs und ggf. Schlüssel für eine stärkere Nutzer Authentisierung abgefragt (Request for RCSID). Mit anderen Worten, die bereits vorhandene Infrastruktur der Netzbetreiber zur Identifizierung (*Wer ist der Nutzer?*) kann verwendet werden. Dieser Identifizierungsprozess ist in Fig. 2 links von der Linie des RCS AuthN Service dargestellt. Der Rückgriff auf bereits bestehende Identifizierungsprozesse ermöglicht eine einfachere und sichere Identifizierung des Nutzers.
5. Anschließend startet der RCS Authentication Service (RCSAuthN Service) die Identifizierung und Authentisierung des Web RCS Clients (RCS clientAuthN request). Dazu fragt der RCS Authentisierungsservice (RCSAuthN Service) beispielsweise den Web RCS Cloud Service nach der IP Adresse der RCS-Client Browser Session zu der vom Nutzer übermittelten URI (Web RCS Cloud Service Adresse) und Session ID.
6. Der Web RCS-Client authentisiert sich beispielsweise mittels des timestamp / TV IP Adresse gegenüber den RCS Authentication Service (RCS clientAuthN response).
7. Der RCS Authentisierungsservice (RCS AuthN Service) startet dann ggf. entsprechend bestehender Sicherheitsanforderungen des Services eine stärkere Authentisierung des Nutzers und fragt nach Bestätigung des Nutzers für Personalisierung des Web RCS-Clients ("Do you really want MyRCS on this TV"),
8. Nach Zustimmung des Nutzers zur Personalisierung (user acknowledgement) und erfolgreicher Web RCS Service Authentisierung authorisiert der RCS Authentisierungsservice (RCS AuthN Service) den Web RCS-Client für die Personalisierung indem der RCS AuthN Service einen Secure Token und eine RCS ID (SIP URI; RCSID) des Nutzers an den Web RCS-Service sendet. Mit anderen Worten, nachdem der Nutzer identifiziert wurde und der Nutzer zusammen mit dem Web RCS-Client zudem sicher authentifiziert wurden, wird es dem Cloud Service, der gewissermaßen als Proxy arbeitet, erlaubt, auf den eigentlichen RCS Service Application Server zuzugreifen. Dies wird in den folgenden Schritten 9-12 beschrieben.
9. Der Cloud basierende Web RCS-Client fragt mittels des Secure Token und Nutzer ID (RCSID) das RCS Profil des Nutzers aus dem RCS Service Application Server ab (Request for RCS profile).
10. Der RCS Service (RCS Service Application Server) übermittelt an den Cloud Service das entsprechende Nutzer Profil (RCS profile).
11. Der Web RCS-Client wird am RCS Service Applicatin Server registriert (RCS Registration).
12. Die RCS-Session zwischen Web RCS-Client und RCS Account des Nutzers wird hergestellt. Insbesondere wird in Schritt 12 der Fig. 2 durch die dargestellten Doppelpfeile links und rechts des Cloud Service die Proxy Funktion des Cloud Service dargestellt.

Einzelne Verfahrensschritte eines zweiten erfindungsgemäßen Verfahrens werden beispielhaft anhand des Flussdiagramms der Fig. 4 diskutiert. Insbesondere wird in dieser Ausführungsform ein RCS-Session Handover beschrieben. Ein RCS Session Handover ist im Sinne dieser Erfindung eine Übergabe einer RCS-Session von einem Endgerät zu einem anderen Endgerät, beispielsweise von einem Smartphone zu einem anderen Endgerät z.B. PC oder TV. Es wird nochmals ausdrücklich hervorgehoben, dass nicht alle Schritte zwingend notwendig sind und nur exemplarisch dargestellt werden. Wiederum entspricht die nachfolgende Nummerierung den Nummern in Fig. 4, wobei Begriffe aus der Fig. 4 nachfolgend zusätzlich in Klammern aufgeführt werden.
1. Ein RCS-Nutzer (User) möchte an einem beliebigen Endgerät (PC/IPTV Device) seine momentan auf dem Smartphone laufende RCS-Session sicher und bequem auf dem beliebigen Endgerät fortsetzen ohne an dem Endgerät (hier PC/TV) persönliche Daten eingeben zu müssen. Wiederum soll der Webbrowser des TV zur Nutzung der RCS Dienste verwendet werden. Um die Daten der bestehenden Session einfach an das Endgerät zu übertragen, kann beispielsweise eine RCS Authentication am IPTV / PC eine Browser Session mit dem Web RCS-Cloud Service initiieren. Hierzu kann beispielsweise mittels Bluetooth die URI des Cloud RCS-Service an den TV/PC übertragen werden. Eine Web RCS-Seite überträgt dann an den Webbrowser vorzugsweise mindestens eine der folgenden Web RCS-Client Information (Push RCS Client Info):
   - den Link zum Web RCS Client cloud Service (URI),
   - die Session ID des Cloud basierenden web clients mit dem Browser, und
   - einen Schlüssel/key der zB aus IP des PC/IPTV Geräts und ggf. eine Zeitmarke (timestamp) enthält.
   Diese Informationen dienen der Identifizierung des Cloud basierende Web RCS-Client gegenüber dem RCS AuthN Service und damit auch gegenüber dem Nutzer und gegenüber der laufenden RCS Session.
   Die nachfolgenden Schritte 2-12 können entsprechend der Fig. 3 ebenfalls für den Fall eines Handover verwendet werden. Es werden hier rein beispielhaft nochmals die entsprechenden Verfahrensschritte, teilweise in einer anderen Terminologie, beschrieben.
2. Der Nutzer (User) übernimmt diese Informationen (IDs) in die RCS Authentication App seines Smartphones, beispielsweise mittels scannen, z.B. Barcodeleser, Kamera, NFC, bluetooth, dect, sound oder WLAN.
3. Die RCS RCS Authentication App im Smartphone oder auf der SIM-Karte wertet diese Informationen des Web RCS-Service aus, bildet aus diesen Informationen nach Nutzerzustimmung eine Web RCS-Client Personalisierungsanfrage (RCS profilpushrequest an den RCS Authentisierungsservice. Hierbei werden beispielsweise die Web RCS Cloud Service Adresse (URI), die Session ID des Cloud basierenden Web Clients mit dem Browser, die IP dieser Browser Session und/oder der timestamp der Session und/oder die RCS ID des Nutzers (SIP URI) und zusätzlich die Informationen aus dem RCS-Client des Smartphones zur laufenden RCS-Session angereichert und übertragen.
4. Der RCS Authentisierungsservice initiiert als erstes eine Identifizierung des RCS-Nutzers gegenüber dem Mobilfunk-Netzerk, IMS oder HSS des RCS Services, beispielsweise basierend auf der IP Adresse des smart phones (network authentication GIBA), oder/oder basierend auf MSISDN und/oder basierend auf der RCS SIP URI oder GBA Credentials. Dazu werden aus dem Network, dem IMS oder HSS die RCS Nutzer IDs und ggf. Schlüssel für eine stärkere Nutzer Authentisierung abgefragt, z.B. GBA push
5. Nach erfolgter Identifizierung (Authentisierung) des Nutzers startet der RCS Authentication Service dann die Identifizierung und Authentisierung des Web RCS-Clients. Dazu fragt der Authentisierungsservice den Web RCS Cloud Service nach der IP der RCS Client Browser Session basierend auf der von Nutzer übermittelten RCS Cloud service URI des Web Clients und Session ID.
6. Der Web RCS Client authentisiert sich beispielsweise mittels des timestamp und oder TV IP Adresse gegenüber den RCS Authentication Service indem der Authentication Service diese mit denen vom Nutzer übermittelnden Daten vergleicht.
7. Optional startet der Authentisierungsservice entsprechend den Sicherheitsanforderungen des Services eine stärkere Authentisierung des Nutzers und fragt nach Bestätigung des Nutzers für Personalisierung und Session handover.
8. Nach Zustimmung Nutzers zur Personalisierung und session handover und erfolgreicher web RCS Service Authentisierung autorisiert der Authentisierungsservice den Web RCS-Client für die Personalisierung indem der RCS AuthN service einen secure Token und die RCS ID (SIP URI) des Nutzers und die Daten zur laufenden RCS Session an den Web RCS Service sendet.
9. Der Cloud basierende Web RCS-Client fragt mittels Secure Token und Nutzer ID das RCS Profil des Nutzers aus dem RCS Service.
10. RCS Service pusht Nutzer Profile.
11. Registration des Web RCS Clients am RCS Service mittels RCS Nutzerprofil.
12. Übernahme der RCS-Session
13. Die RCS Session zwischen Web RCS Client und RCS Service Account des Nutzers wird hergestellt und mittel der RTC Browser Session am TV / PC fortgesetzt.

Gegenüber den bekannten Verfahren zur Personalisierung von Web RCS-Services bietet die Erfindung folgende Vorteile.

Für RCS Service Provider ergibt sich eine sichere Authentisierung des Nutzes sowie die Möglichkeit der Nutzung von Cloud basierenden RCS-Diensten. Die Authentisierung für Handover von einer RCS Session von einem Endgerät zu einem anderen Endgerät wird ermöglicht. Zudem wird Phishing unterbunden bzw. unmöglich gemacht und eine keylogging Kostensenkung durch vereinfachte Nutzerverwaltung erreicht. Insgesamt kann ein nutzerfreundliches, attraktives, einfaches Login für personalisierte Services bereitgestellt werden.

Auch für den Nutzer bzw. Endkunden ergeben sich einige Vorteile, wie beispielsweise ein erhöhter Datenschutz, insbesondere eine erhöhte Privacy gegenüber Cloud Services und erhöhte Privacy gegenüber fremden Endgeräten.

Wesentliche Unterschiede zu bekannten Verfahren liegen insbesondere darin, dass die Privacy des Nutzers gegenüber dem fremden Endgerät geschützt ist und dass sich gemäß dem erfindungsgemäßen Verfahren der Web RCS-Dienst gegenüber dem Nutzer identifiziert und nicht der Nutzer gegenüber dem Web RCS-Dienst.

Dieser wesentliche Unterschied wird vorzugsweise durch eine Architektur/ ein System erreicht das vorzugsweise die nachfolgend diskutierten Komponenten aufweist, die beispielsweise in Fig. 1 dargestellt sind. Zudem ist es ein erfindungsgemäßes Herausstellungsmerkmal, dass ein sicheres Daten Set des Web RTC-Clients (beispielsweise URI der RCS Web Service Servers, Session ID, Browser Session IP, Timestamp; siehe oben) über den Webbrowser an den RCS Authentisierungs Client (RCS AuthN App) im zusätzlichen Endgerät (Smartphone) des Nutzers übermittelt wird. Dies geschieht beispielsweise dadurch, dass das zusätzliche Endgerät einen Barcode scannen kann der im Webbrowser angezeigt wird.

Ein weiteres erfindungsgemäßes Herausstellungsmerkmal ist die Kombination einer Nutzer ID mit einem Web RCS-Client ID Set im Authentisierungs Client und die Übertragung dieser Kombination an den Authentisierungsservice in der neuen SIP Nachricht "RCSprofilepushrequest".

Schließlich wäre auch als weiteres erfindungsgemäßes Herausstellungsmerkmal die Authentisierungsaufforderung "RCS clientAuthNrequest" des Authentisierungsservices zu Authentisierung des Web RCS-Clients zu nennen.

Das erfindungsgemäße Verfahren bzw. System erfüllt hohe Datenschutzanforderungen (Schutz der Privacy), ist vorzugsweise mit Standardkomponenten realisierbar und zudem vorzugsweise Mobilfunk und RCS Service Provider übergreifend einsetzbar. Schließlich ist es auch vorteilhaft, dass das Verfahren bzw. System unter der Kontrolle des "mobile network operators" steht.

Die Verwendung des erfindungsgemäßen Verfahrens ermöglicht Identifizierung und Authentisierung von RCS-Nutzern an eigenen und fremden Geräten und damit die Realisierung von mobilen personalisierten RCS-Diensten an beliebigen Endgeräten. Die Verwendung des erfindungsgemäßen Verfahrens ermöglicht die Realisierung von mobilen personalisierten RCS-Diensten auch an IPTV Endgeräten, die bisher keine Möglichkeit der Authentication fremder RCS Nutzer bieten.

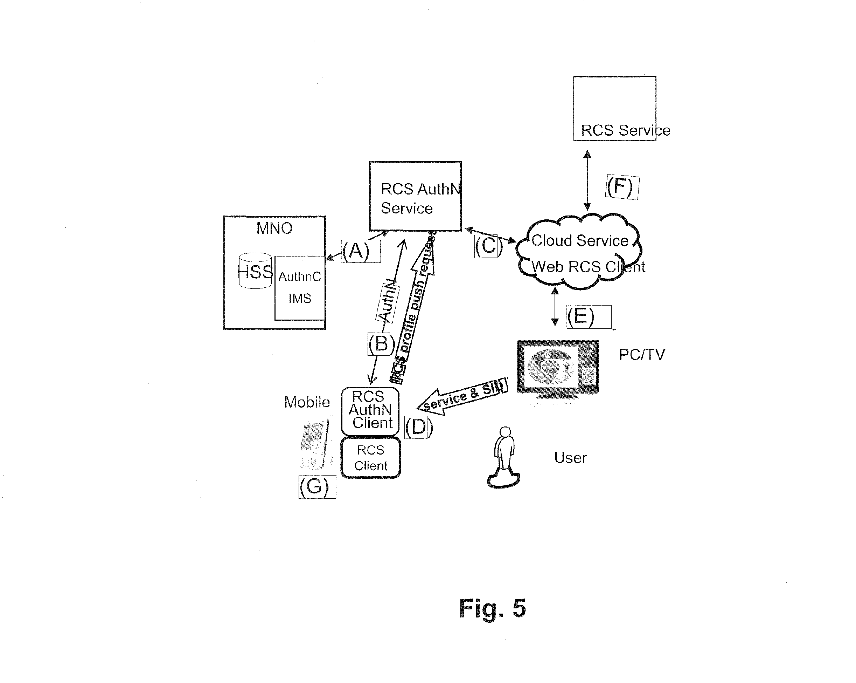

Das erfindungsgemäße System umfasst serverseitig vorzugsweise folgende Komponenten (siehe Fig.5):
i) RCS Authentication Service (RCS AuthN Service),
ii) RCS Service Application Server und
iii) Cloud Service, Web Server, Web RCS-Client.

Zudem umfasst das erfindungsgemäße System clientseitig vorzugsweise folgende Komponenten:
a) RCS Authentication Client (RCS AuthN App) und
b) Endgerät mit einem Webbrowser (TV Device).

Mit anderen Worten, das erfindungsgemäße System beruht im Wesentlichen auf zwei erfindungswirksamen Modulen, die beispielhaft in Fig.5dargestellt sind:

### 1) RCS Authentication Service mit RCS Authentication Function

Vorzugsweise umfasst diese erste Komponente drei Module.

Modul A dient zur Kommunikation mit den AuthNC/IMS der Mobilfunknetze über Schnittstelle A.

Modul B dient zur Kommunikation mit den RCS Authentication Client (RCS AuthN App) des zusätzlichen Endgeräts (Smartphone).

Modul C dient zur Kommunikation mit den Cloud basierenden Web RCS-Service.

### 2) RCS Authentication Client

Vorzugsweise umfasst diese zweite Komponente zwei Module.

Modul D dient zur Kommunikation mit den PC / IPTV über Schnittstelle D.

Modul B dient zur Kommunikation mit den RCS Authentication Service.

Im Einzelnen:

Die RCS Authentication Funktion des erfindungsgemäßen Systems bietet serverseitig ein Modul (A), das vorzugsweise die Kommunikation für Nutzer Identifizierung und Authentisierung mit AAA (Authentication, Authorization and Accounting), z.B. den AuthN Center oder RCS/IMS Plattform der einzelnen Mobilfunkbetreiber übernimmt.

Die RCS Authentication Funktion des erfindungsgemäßen Systems bietet serverseitig vorzugsweise ein weiteres Modul, welches den RCSprofilepushrequest (B) für die Kommunikation mit dem Authentication Client des zusätzlichen (mobilen) Endgeräts, beispielsweise dem Smartphone, realisiert.

Die RCS Authentication Funktion des erfindungsgemäßen Systems bietet serverseitig vorzugsweise ein weiteres Modul (C) zur Authentisierung des Web RCS-Services mittels RCScIientAuthNrequest und zur Übertragung von Autorisierungsinformationen (secure Token) an den Web RCS-Client des Web RCS Cloud Service.

Der Web RCS Cloud Services bietet serverseitig vorzugsweise ein Modul (E) für die Kommunikation mit dem Endgerät (beispielsweise IPTV) oder Webbrowser des PC zur Übertragung der URI (Uniform Resource Identifier; engl. für "einheitlicher Bezeichner für Ressourcen" der RCS Web Service Servers, Session ID, Browser Session IP, Timestamp,... des Web RCS-Clients und zur Etablierung/ Durchreichen der RCS Session mittels Web RTC.

Der Web RCS Cloud Services bietet serverseitig vorzugsweise ein weiteres Modul (F) für die Kommunikation mit dem RCS Service zur Autorisierung und Übernahme des Nutzer Profils und Registrierung und RCS Session.

Der Web RCS Services bietet serverseitig vorzugsweise ein weiteres Modul (C) für die Kommunikation mit dem RCS Authentication Service zur Authentisierung und Autorisierung des Web RCS Clients.

Der RCS Authentication Client des erfindungsgemäßen Systems umfasst vorzugsweise einen Client der die Informationen die der Web RCS-Service über Schnittstelle (E) an den Browser geliefert hat aus der Schnittstelle (D) z.B. über die Kamera, WLAN, Bluetooth, NFC, DTMF... des zusätzlichen (mobilen) Endgerätes ausliest.

Weiterhin startet dieser RCS Authentisierungs-Client den RCSprofilepushrequest über die Schnittstelle (B) und initialisiert ggf, eine zusätzliche Nutzer Authentisierung und Nutzer Zustimmung.

Vorzugsweise verwendet das erfindungsgemäße System standardisierte Protokolle (z.B. http, https, SIP, oAuth, openID,...) und/oder standardisierte Endgeräte.

Figur 5 zeigt exemplarisch Komponenten des erfindungsgemäßen Systems mit entsprechenden Schnittstellen zur Durchführung des erfindungsgemäßen Verfahrens.
(A) Schnittstelle des RCS Authentication Service zur Kommunikation mit den AuthN Center/ IMS der Mobilfunknetze zur Nutzer Identifizierung und Authentisierung des Nutzers.
(B) Standardisierte SIP Schnittstelle des RCS Authentication Service zur Kommunikation mit dem RCS Authentication Client. Sie wird realisiert unter Zuhilfenahme der standardisierten SIP Schnittstelle und wird erfindungswirksam um die Nachricht "RCS profilepushrequest" erweitert. Die Nachricht "RCS profilepushrequest" enthält folgende Informationen: URI der Web RCS Cloud service Servers, Session ID des TV Browser mit Web RCS Client, Browser Session IP, Timestamp,... des Web RCS Clients und RCS ID des Nutzers.
(C) Standardisierte http / https Schnittstelle zur Authentisierung des Web RCS Services erfindungswirksam mit der neuen Nachricht RCS dient AuthN request und Autorisierung des Web RCS Clients - Übertragung Secure Token an den Web RCS Client.
(D) Schnittstelle zwischen IPTV Endgerät und Mobilen Endgerät ist erfindungswirksam und dient zur Realisierung der Identifikation des Web RCS Services gegenüber dem Nutzer und zur Übertragung der Web RCS Client Authentication Informationen, Folgende Informationen werden erfindungswirksam über diese Schnittstelle übertragen: URI der Web RCS Cloud service Servers, Session ID des TV Browser mit Web RCS Client, Browser Session IP, Timestamp,... des Web RCS Clients. Sie kann realisiert werden z.B. mit der Kamera des Mobilen Endgerätes zum Fotografieren des am Browser angezeigten 2D Barcodes oder über NFC NFC, WLAN,...
(E) Standardisierte http / https Schnittstelle ist erfindungswirksam für die Kommunikation des Web RCS Cloud Services mit dem IPTV Endgerät oder Browser des PC zur Übertragung : URI der Web RCS Cloud service Servers, Session ID des TV Browser mit Web RCS Client, Browser Session IP, Timestamp,... des Web RCS Clients und zur Etablierung/ Durchreichen der RCS Session mittels Web RTC.
(F) Standardisierte http / https Schnittstelle zur Übertragung von Autorisierungsinformationen an den RCS Service und User Attributen an den Web RCS Client des Web RCS Cloud Service.
(G) Schnittstelle zwischen RCS AuthN App und RCS Client im Smartphone zur Übertragung der RCS Session Informationen für handover.

Im Folgenden werden Abkürzungen die in der Anmeldung verwendet werden wie folgt aufgeführt:
- AAA: Authentication, Authorization and Accounting
- AKA: Authentication and Key Agreement
- AP: Authentication Proxy
- AS: Application Server
- ASP: Application Service Provider
- DTMF: [ ]
- ETSI: European Telecommunications Standards Institute
- GPRS: General Packet Radio Service
- GSM: Global System for Mobile communications
- HLR: Home Location Register
- HSS: Home Subscriber System
- HTTP: Hypertext Transport Protocol
- HTTPS: Hypertext Transport Protocol Secure
- IdM: Identity Management
- IdP: Identity Provider
- IMS: IP Multimedia Subsystem
- IMSI: International Mobile Subscriber Identity
- ISIM: IM (IP Multimedia) Services Identity Module
- IP: Internet Protocol
- IPSEC: IP Security
- ME: Mobile Equipment
- MSISDN: Mobile Subscriber ISDN Number
- NAF: Network Application Function
- NFC: Near Field Communication
- NGN: Network Generation Network
- OTP: One Time Password
- PKI: Public Key Infrastructure
- RADIUS: Remote Authentication Dial In User Service
- RCS: Rich Communication Service
- SIM: GSM Subscriber Identity Module
- SIP: Session Initial Protocol
- TE: Terminal Equipment
- TLS: Transport Layer Security
- TR: Technical Report (3GPP/ETSI)
- TS: Technical Specification (3GPP / ETSI)
- UE: User Equipment
- UMTS: Universal Mobile Telecommunications System
- USIM: Universal Subscriber Identity Module

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

## Patentansprüche

1. Verfahren zur Personalisierung eines Nutzers der auf Cloud basierte Web RCS-Dienste zugreift, unter Schutz seiner Privatsphäre, mit den Schritten:
Bereitstellen eines Rich Communication Service, RCS, Service Application Servers, auf den mittels eines RCS-Clients auf RCS-Dienste zugegriffen werden kann,
Bereitstellen eines RCS Authentisierungsservice, RCS AuthN Service, der überprüft ob ein RCS-Client auf den RCS-Dienst zugreifen darf;
Bereitstellen eines Cloud Service der einen Web RCS-Client bereitstellt,
wobei der Nutzer mit einem Webbrowser (51) eines Endgeräts (50) auf den Web RCS-Client des Cloud Service zugreift, um RCS-Dienste zu nutzen,
und der Webbrowser (51) vom RCS Authentisierungsservice Informationen zur Personalisierung des Nutzers des Webbrowser erhält, die mit Hilfe eines zusätzlichen Endgeräts (60) mit einer RCS Authentication Applikation (61) personalisiert werden,
wobei die RCS Authentication Applikation (61) vom Nutzer vorab personalisiert wurde, sodass die RCS Authentication Applikation (61) den Nutzer gegenüber dem RCS Authentisierungsservice personalisiert.

2. Verfahren nach Anspruch 1, wobei
i) das Endgerät (50) ein PC oder ein internetfähiger Fernseher, IPTV, ist und der Webbrowser (51) vorzugsweise WebRTC fähig ist; und/oder
ii) das zusätzliche Endgerät (60) ein Mobiltelefon, vorzugsweise ein Smartphone ist.

3. Verfahren nach Anspruch 1 oder 2, wobei der Nutzer zur sicheren Personalisierung keine Nutzerkennung wie usernamen, passwort und/oder PIN in den Webbrowser (51) eingeben muss und der Webbrowser (51) vorzugsweise keine Nutzerkennung speichert.

4. Verfahren nach einem der vorhergehenden Ansprüche, wobei der Nutzer
i) mit dem Webbrowser (51) eine neue RCS-Session startet; oder
ii) eine bereits bestehende RCS-Session vom zusätzlichen Endgerät (60) mit dem Webbrowser weiter ausführen will und vom zusätzlichen Endgerät (60) auf den Webbrowser übergibt, vorzugsweise ein RCS-Session Handover.

5. Verfahren nach Anspruch 4, wobei die Informationen zur Personalisierung des Clientss vom Webbrowser (51) an das zusätzliche Endgerätes (60) durch mindestens eines der Folgenden Verfahren übermittelt werden:
Scannen eines im Webbrowser dargestellten Barcodes, vorzugsweise eines Strichcodes, 2D Barcodes oder 3D Barcodes, NFC, bluetooth, dect oder Abtippen.

6. Verfahren nach Ansprüche 4, Option ii), wobei die URIs, insbesondere die SIP URIs aus Start und Ziel bzw. from und to, der bestehenden RCS-Session des RCS-Clients des zusätzlichen Endgeräts (60) über den RCS Authentication Client und über den Authentication Service an den Web RCS-Client übertragen werden.,.

7. Verfahren nach einem der vorhergehenden Ansprüche 4 bis 6, wobei
der Authentisierungsservice, RCS AuthN Service, eine Identifizierung und/oder Authentifizierung des Nutzers und/oder des Web RCS-Clients durchführt und bei erfolgreicher Identifizierung und/oder Authentifizierung einen Secure Token an den Cloud Service übergibt (8), auf dem der Web RCS-Clients läuft,
sodass Web RCS-Clients (51) sich gegenüber
einem RCS Service Application Server autorisiert
und dadurch der Webbrowser (51) auf dem Endgerät (50) über den Web RCS-Client als Proxy auf den RCS-Service Application Server zugreifen kann.

8. Verfahren nach einem der vorhergehenden Ansprüche, wobei die Informationen zur Identifizierung und/oder Authentisierung zumindest folgenden Daten enthält:
einen Link zum Web RCS-Client, URI; eine Session ID des Cloud basierenden Web Clients und einen Schlüssel, der beispielsweise eine IP Adresse des Endgeräts und/oder eine Zeitmarke und user ID und ggf user credentials und die RCS Session URIs.

9. Datenverarbeitungssystem mit einer Ausführungsumgebung, zur Durchführung eines Verfahrens nach einem der Ansprüche 1 bis 8.

10. Datenverarbeitungsprogrammprodukt, das direkt in den internen Speicher eines digitalen Datenverarbeitungssystem geladen werden kann und Softwarecodeabschnitte umfasst, mit denen die entsprechenden Schritte gemäß der Ansprüche 1 bis 8 ausgeführt werden, wenn das Produkt in einem Datenverarbeitungssystem läuft.

11. System zur sicheren Personalisierung eines Nutzers der auf Cloud basierte Web RCS-Dienstes zugreift mit:
a. Rich Communication Service, RCS, Service Application Servers, auf den mittels eines RCS-Clients auf RCS-Dienste zugegriffen werden kann;
b. einem RCS Authentisierungsservice, RCS AuthN Service, der überprüft ob ein RCS-Client auf den RCS-Dienst zugreifen darf;
c. ein Cloud Service der einen Web RCS-Client bereitstellt;
d. einem Endgerät (50) mit einem Webbrowser (51) den der Nutzer für den Zugriff auf einen Web RCS-Client verwenden kann; und
e. einem zusätzlichen Endgerät (60) mit einer RCS Authentication Applikation.

12. System nach Anspruch 11, wobei das Endgerät (50) ein PC oder ein internetfähiger Fernseher ist.

13. System nach Anspruch 11 oder 13, wobei das zusätzliche Endgerät (60) ein Smartphone ist.
